# EUROPEAN PATENT APPLICATION

(11) **EP 4 593 356 A1**
(43) Date of publication of application: **30.07.2025**
(21) Application number: 24305154.7
(22) Date of filing: 29.01.2024
(51) Int. Cl.: H04L 67/02, H04L 9/40

(54) **METHOD OF WEB APPLICATION FILTERING**

(71) Applicant: THALES DIS FRANCE SAS, 92190 Meudon (FR)
(72) Inventor: GARREAU, Eric, 83210 LA FARLEDE (FR); BOHER, Teddy, 84300 CAVAILLON (FR); LHOUMEAU, Yann, 83200 TOULON (FR); SCHAFF, Alexandre, 13720 BELCODENE (FR)
(74) Representative: Bricks, Amélie

(57) **Abstract**

The present invention relates to a method for filtering HTTP messages comprising arguments characterized by an argument name and an argument value, sent to or from a web application to protect against attacks said web application, performed by a Web Application Firewall electronic device comprising a memory storing negative filtering rules to be applied to at least one collection of arguments names or arguments values and comprising:
• during a learning phase: determining, from the received HTTP messages, a set of metadata comprising, for arguments of the received messages, each argument's name and, associated therewith, metadata of the argument, without disclosing the value of the argument; generating from said metadata set an API description of the web application, comprising all arguments names of the metadata set and, for each argument name, allowed values for the metadata associated therewith,
• during a positive filtering rules generation phase: generating WAF positive filtering rules by automatically transforming arguments' metadata allowed values of the API description into WAF positive filtering rules,
• at runtime: generating from a received HTTP message, a first collection comprising names of the arguments of said HTTP message and a second collection comprising values of the arguments of said HTTP message; applying said generated WAF positive filtering rules to said first and second collections; generating updated first and second collections by, for each argument fulfilling a WAF positive filtering rule, removing said argument's name from the first collection and said argument's value from the second collection; applying said negative filtering rules to said updated first and second collections.

## Description

### FIELD OF THE INVENTION

The present invention relates to the field of web application protection, and more particularly of a method for performing an efficient filtering of web application messages by a WAF.

### BACKGROUND OF THE INVENTION

Organizations need to mitigate risks to their applications on the web. Security must be provided on the network before requests reach web application servers. Web Application Firewalls (WAF) provide such a security layer by filtering incoming requests using predefined rules and deciding what action to take if a rule is triggered, therefore enabling a secure deployment of web applications. Similarly, WAFs may filter answers to such requests, generated by web application servers, in order to detect answers whose format or content is different than expected. Such an unexpected answer may for example correspond to a confidential data leak and may be the result of a misconfiguration of the web app server or of a malware.

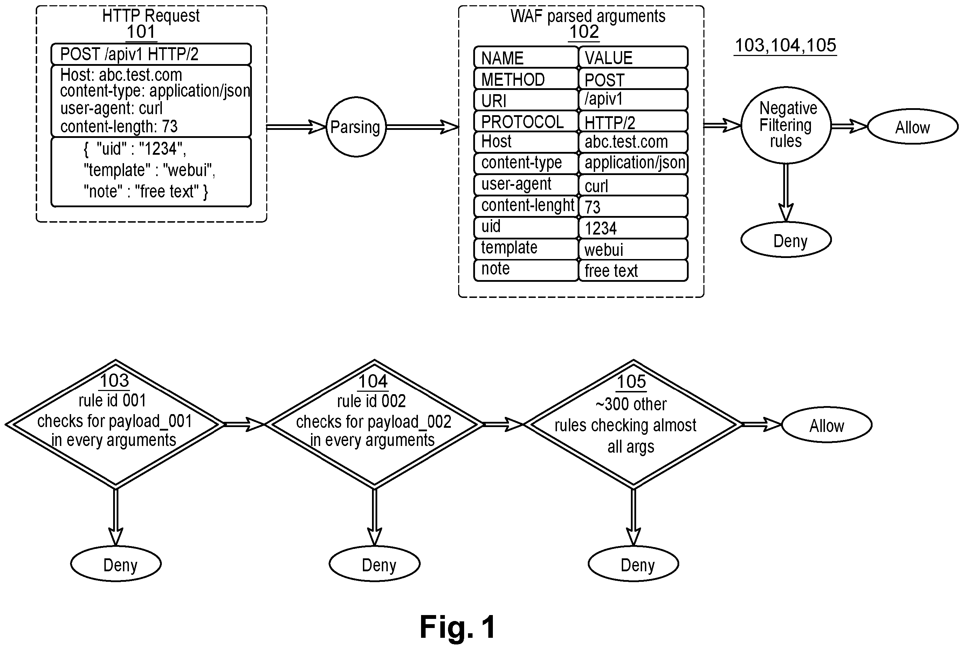

WAF rules may be negative filtering rules. Such rules, based on the analysis of existing attacks and malevolent requests or answers, describe messages which are not legitimate and should be denied. An example of such a filtering using negative filtering rules is provided on **Figure 1****.** In this example, a HTTP request 101 is turned, by parsing the request, into collections of arguments' names and arguments' values 102 which are then subject to the negative filtering rules 103,104,105..., one rule after the other.

A first drawback of performing a blacklist filtering based on negative filtering rules is the large number of rules which must be implemented and against which each message should be checked for providing a sufficient level of security. A second drawback of such a filtering is that it only protects against known threats, whose malevolent requests or answers may be described through a negative rule. A third drawback is that it may trigger numerous false positive, classifying as dangerous legitimate messages which are too close to messages that correspond to attacks.

In order to decrease both the load of a blacklist filtering and the number of false positive, users may remove some negative filtering rules but it is done at the cost of a decrease of the security level brought by such a filtering.

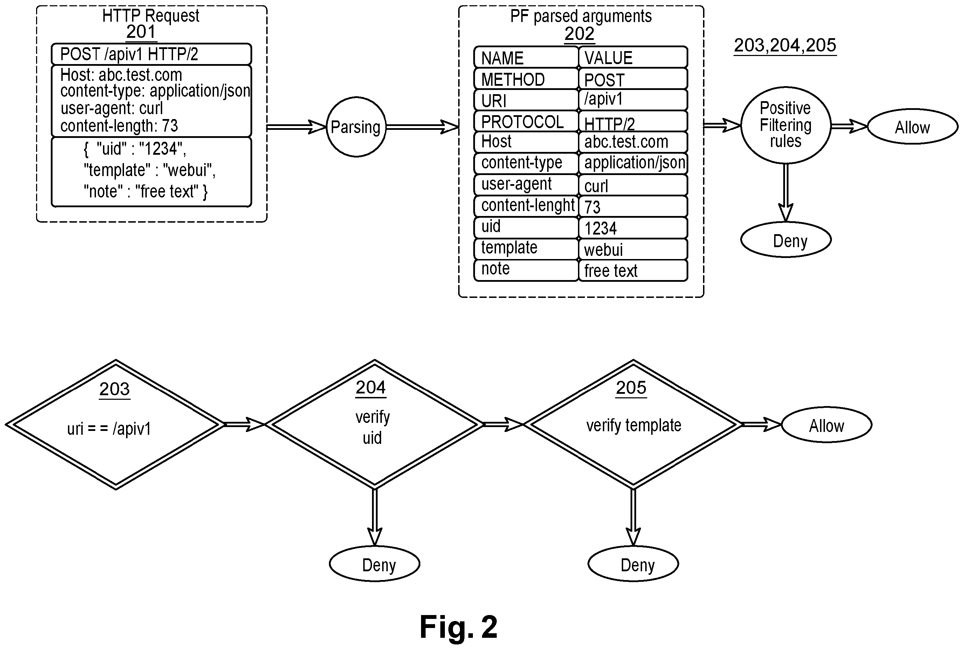

On the other hand, filtering may be performed using a whitelist made of positive filtering rules which this time describe the messages which are considered as legitimate and can be allowed. An example of such a filtering using positive filtering rules is provided on **Figure 2**. In this example, a HTTP request 201 is turned, by parsing the request, into collections of arguments' names and arguments' values 202. All the arguments of the request subject to a positive filtering rule are then checked 203, 204, 205 against their positive filtering rule, one argument after the other. Such a filtering can protect against any rogue request or answer that does not correspond to the positive filtering rules. Nevertheless, such a filtering is usually difficult to set up efficiently. Positive rules are often too loose and allow messages corresponding in fact to attacks. On the contrary, when a positive rule set is too strict, it may deny legitimate requests or answers.

Solutions have been proposed to generate automatically whitelists or blacklists of filtering rules, decreasing the burden of the rules generation compared to a manual generation. Nevertheless, such methods produce large rule sets which still generate too much false positive or false negative responses of the WAF and lead to unsatisfactory performances of the WAF. In addition, they produce rules which are described using the rule description language of the WAF, an example of which is given hereafter, which is not easily readable by humans and makes it difficult for a WAF administrator to modify manually the rules for improving a rule set without impact on the legitimate messages, as WAF administrators usually do not know the web applications' APIs:

```
 SecRule TX:POST_user_JSON "!@eq 1" "phase:2,id:CBPPOST_userJSON, t:none, pass,
   nolog, noauditlog, skipAfter:POST_USERJSON_END"
   SecRule &ARGS: id|&ARGS:username|&ARGS: firstName|&ARGS:
   lastName|&ARGS:email|&ARGS: password I I &ARGS: phonel&ARGS: userStatus "!@eq 1"
  "id:POST_userRB2,log,auditlog,phase:2,deny,t:none,msg: 'Missing mandatory ARG
   %{MATCHED_VAR}' "
   SecRule ARGS_NAMES
  "!@rx^(id|username|firstNamellastName|email|password|phone|userStatus)$""id:POST_u
  serr B U 3, log, aud itlog, phase: 2, deny, t: none, m sg:'U nauthorized ARG%{MATCHED_VARI'"
  SecRuleARGS:id ""!@rx"[0-9]+{1,1}$"
  "id:POST_userRB4,log,auditlog,phase:2,deny,t:none,msg: 'Invalid Parameter Value
   %{MATCHED_VAR}'} skip: 1"
   SecAction "id:RT0017 ,ctl:removeTarget=ARGS:id,phase:2, pass,log,auditlog"
   SecRule ARGS:username "!@rx ^(?: [0-9A-Za-z]+){5,5}$"
         "id:POST_userRB5,log,auditlog,phase:2,deny,t:none,msg: 'Invalid Parameter Value
   %{MATCHED_VAR}' ,skip: 1"
   SecAction "id:RT0018,ct1: removeTarget=ARGS: username, phase:2,pass,log,auditlog"|
```

The task is even more difficult for web applications developers or operators as it requires knowledge of the WAF rules set and of the WAF specific rule description language.

Consequently, there is a need for a web application filtering method, with good performances, generating filtering rules easily understandable by an administrator, an operator or a developer, and leading to a lower rate of false positive events while ensuring truly malicious messages are filtered out.

### SUMMARY OF THE INVENTION

For this purpose and according to a first aspect, this invention therefore relates to a method for filtering HTTP messages comprising arguments characterized by an argument name and an argument value, sent to or from a web application to protect against attacks said web application, performed by a Web Application Firewall electronic device comprising a processor and a memory storing negative filtering rules to be applied to at least one collection of arguments names or arguments values and comprising:
- during a learning phase:
   - receiving HTTP messages sent to or from the web application,
   - determining, by the processor, from the received HTTP messages, a set of metadata of said received HTTP messages, said metadata set comprising, for arguments of the received messages, each argument's name and, associated therewith, metadata of the argument, without disclosing the value of the argument,
   - generating, by said processor, from said metadata set an Application Programming Interface (API) description of the web application, comprising all arguments names of the metadata set and, for each argument name, allowed values for the metadata associated therewith,
- during a positive filtering rules generation phase, performed by said processor
   - generating Web application firewall (WAF) positive filtering rules by automatically transforming arguments' metadata allowed values of the API description into WAF positive filtering rules,
- at runtime, during a message filtering phase performed by a Web Application Firewall electronic device :
   - receiving a HTTP message, comprising arguments characterized by an argument name and an argument value,
   - generating from said received HTTP message, a first collection comprising names of the arguments of said HTTP message and a second collection comprising values of the arguments of said HTTP message,
   - applying said generated WAF positive filtering rules to said first and second collections,
   - generating updated first and second collections by, for each argument fulfilling a WAF positive filtering rule, removing said argument's name from the first collection and said argument's value from the second collection,
   - applying said negative filtering rules to said updated first and second collections.

Such a method enables to generate automatically efficient sets of filtering rules, while limiting the cost of the filtering. Finally, building the rules on metadata of the message arguments and not on the values of the arguments enables to build a set of rules without ever disclosing any sensitive data comprised in the HTTP messages used in the learning phase.

In an embodiment, the Web Application Firewall electronic device may comprise a user graphical interface and the method may comprise, during the positive filtering rules generation phase, displaying the generated API description in said graphical user interface to an administrator for customizing by the administrator said arguments' metadata allowed values; and generating Web application firewall (WAF) positive filtering rules by automatically transforming arguments' metadata allowed values of the API description into WAF positive filtering rules may comprise automatically transforming administrator-customized arguments' metadata allowed values of the API description into WAF positive filtering rules.

Such an embodiment enables an easy customization of the generated rules by the WAF administrator, still without ever disclosing any sensitive data from HTTP messages.

Said HTTP message may be a HTTP request to the web application or a HTTP answer generated by the web application.

Thus, the method according to the invention is able to prevent both incoming attacks to the web application by filtering out malicious requests and data leaks from the web application by filtering out suspicious answers.

Said argument metadata may be among argument type, argument format and argument length.

Said set of metadata of an HTTP message may comprise metadata from any part of the HTTP message including request line, headers and body.

It enables to performing the filtering on any part of the HTTP message.

According to an embodiment, when said web application receives a message comprising an argument not subject to any WAF positive filtering rule, or subject to a WAF positive filtering rule and not verifying it, a predetermined action may be determined.

Such a predetermined action may be determined among dropping said message, sending a deny response and applying a negative filtering.

According to an embodiment, said generated WAF positive filtering rules may be checked against messages comprising arguments characteristic of known attacks.

Such a check enables to verify that the generated WAF positive filtering rules are not too loose and filter out messages known to be malicious.

According to a second aspect, this invention therefore relates also to a computer program product directly loadable into the memory of at least one computer, comprising software code instructions for performing the steps of the method according to the first aspect when said product is run on the computer.

According to a third aspect, this invention therefore relates also to an electronic device comprising a processor and a memory storing negative filtering rules configured for performing the steps of the method according to the first aspect.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates schematically an example of a filtering using negative filtering rules;
- Figure 2 illustrates schematically an example of a filtering using positive filtering rules;
- Figure 3 is a schematic illustration of a system according to an embodiment of the present invention;
- Figure 4 is a schematic illustration of a WAF according to an embodiment of the present invention;
- Figure 5 illustrates schematically a method for filtering HTTP message according to an embodiment of the present invention;
- Figure 6 illustrates an example of part of an API description generated by the method according to the present invention;
- Figure 7 illustrates an example of a display of the API description generated by the method according to the present invention;
- Figure 8 illustrates an example of filtering according to the method of the present invention.

### DETAILED DESCRIPTION OF EMBODIMENTS OF THE INVENTION

The invention aims at performing an efficient filtering of HTTP messages sent to or from a web application in order to protect this web application against attacks.

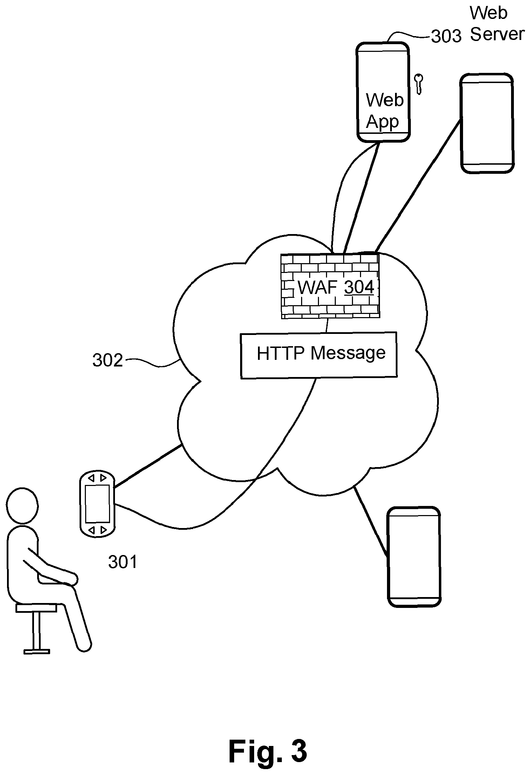

As shown on **Figure 3****,** a client device 301 may exchange HTTP messages, through a computer network 302, with a web server 303 running the web application to be protected. Such a computer network may be a wireless network such as a WiFi network, or a wired network such as an Ethernet network. Such messages include HTTP requests sent by the client to the web application, and HTTP answers generated in response by the web application and sent from the web server to the client device.

A HTTP request may be malicious and be a threat to the web application. Its body may for example contain a malicious payload designed to compromise the web server when the web application processes the request.

In order to mitigate the risk posed by such malicious requests, a Web Application Firewall electronic device 304, hereafter called WAF, is located between the client device and the web server and may filter the requests sent by the client device to the web application in order to prevent malicious requests from reaching the web application.

In some cases, it may also be needed to filter HTTP messages sent from the web application to the client device. For example, an attacker may have successfully transmitted to the web application despite the filtering of HTTP requests by the WAF a malicious HTTP request instructing the web application to send back to the attacker confidential data he is not entitled to access. It may be the result of a poor configuration of the WAF with too loose filtering rules. Alternatively, the web application itself may be misconfigured and may leak confidential data to the client device as a response to a legitimate request. To mitigate such risks, the WAF may also filter HTTP answers sent from the web application to the client device.

In the embodiment depicted on Figure 3, the WAF 304 is separate from the web server. In a different embodiment, a single device may act as both the WAF and the web server, filtering HTTP requests it receives as input before passing it to the web application and/or filtering HTTP answers of the web application before transmitting it to the client device.

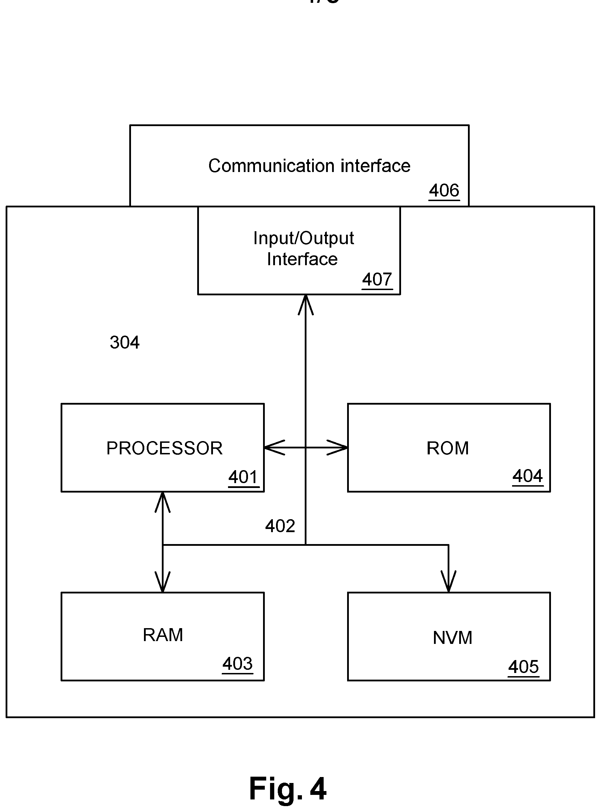

As depicted on **Figure 4****,** the WAF may comprise a processor 401, connected via a bus 402 to a random-access memory (RAM) 403, a read-only memory (ROM) 404, and/or a non-volatile memory (NVM) 405. The WAF may further include a communication interface 406 connected to the bus and which may be used to connect the WAF to the computer network 302. The WAF may also include an input-output interface 407 providing interfaces to an administrator of the WAF, such as one or more screens, loudspeakers, a mouse, tactile surfaces, a keyboard etc... Such an administrator may administrate the WAF either directly through the input-output interface 407 or remotely through a user interface displayed at a remote administration device connected to the WAF through the computer network 302.

The WAF is designed to filter HTTP messages by using predefined filtering rules. Such rules may for example be defined by the administrator and are stored in the non-volatile memory (NVM) 405 of the WAF.

In the description below, the expression "WAF administrator" encompasses the administrator of the WAF device itself, as well as any person in charge of defining filtering rules of the WAF, such a developer of the web application.

As described above, the filtering rules of the WAF may comprise both negative filtering rules and positive filtering rules. Negative filtering rules, also called "blacklist" rules, are designed to filter out HTTP messages corresponding to known malicious messages. Positive filtering rules, also called "whitelist" rules, are designed to filter out HTTP messages which do not correspond to legitimate messages.

In an embodiment, the WAF itself may be composed of two devices: one in charge of applying a positive filtering, which can be called an API Gateway, and another in charge of applying a negative filtering.

As explained above, it is difficult for WAF administrators to set up either positive or negative filtering rules which are both efficient in filtering threats and which do not lead to often rejecting legitimate messages. Therefore, the goal of the invention is to provide a method, and associated device, enabling an administrator to easily obtain a set of filtering rules efficiently filtering out HTTP messages which are not compliant with a security policy, without generating a high rejection rate of legitimate messages. The invention also aims at producing a set of filtering rules which are efficient in terms of computation, in order to minimize to load for the device performing the filtering of HTTP messages.

In order to achieve these goals, a first main idea of the invention is to make the WAF first analyze HTTP messages sent to or from the web application, without filtering it, in order to generate an API description of the web application, and then to derive positive filtering rules adapted to this legitimate HTTP traffic. Such rules, derived from genuine HTTP messages processed by the web application, will block very few legitimate requests and at the same time will not be too permissive.

Of course, a rule set automatically generated from a limited set of messages will never be perfect. Therefore, optionally, another idea of the invention is to enable the administrator of the WAF to check and customize the API description of the web application before filtering rules are derived from it. To make the API description easily understandable, it may be presented to the administrator through a graphical user interface, in a human-readable language that is not related to the syntax of the filtering rules of the WAF.

Despite such WAF's positive filtering rules, it may still be difficult to obtain a positive filtering rule set with both a low false negative detection rate (legitimate messages rejected as non-compliant with rules) and a low false positive detection rate (messages that should be filtered out but are considered as compliant). Therefore, the second main idea of the invention is to make the WAF combine a first filtering using the positive filtering rules it generates and a second filtering using a set of predefined negative filtering rules designed to filter out malicious or harmful messages. The third main idea of the invention is, when applying to a given HTTP message the second filtering using the negative filtering rules, to take advantage of the fact that at least some of the arguments of the message have been approved through the first filtering using the positive filtering rules and thus that there is no need to check again these arguments by the second filtering using the negative filtering rules.

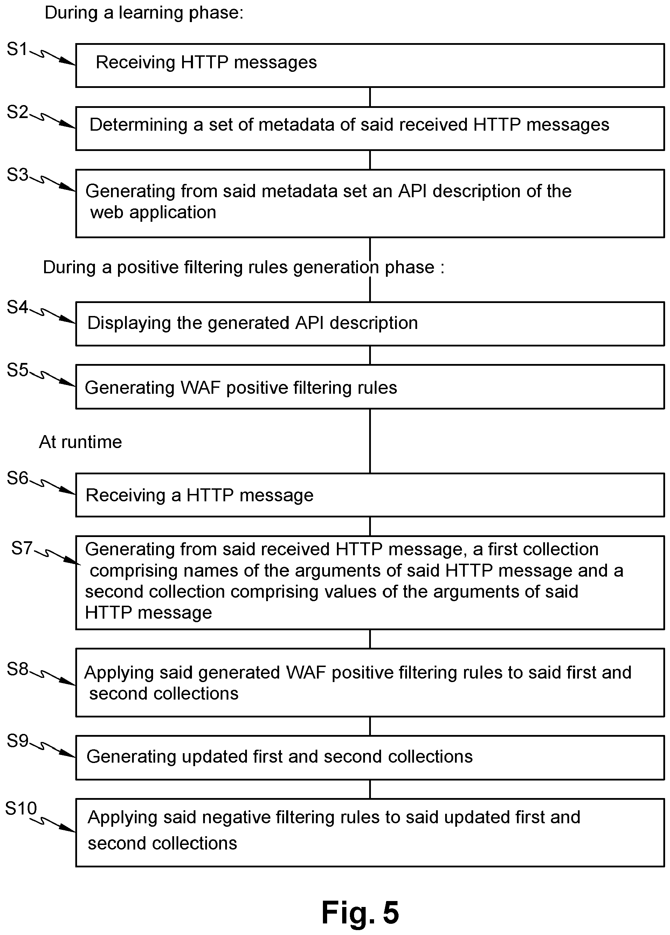

The following paragraphs describe the steps of the method according to the first aspect of the invention, as depicted on **Figure 5****.**

First, the WAF, during a learning phase learns from legitimate HTTP traffic to and from the web application to generate an API description of the web application.

In a first step S1 of the learning phase, the WAF receives HTTP messages sent to or from the web application. These are supposed to be legitimate messages exchanged between the web application and a legitimate user.

Any HTTP message discussed in this description is supposed to be composed of multiple arguments, each argument being characterized by an argument name and an argument value. A parser may be needed for extracting arguments' name and arguments' value from the message body. Such a parser may be adapted to the format of the message body, such as XML, HTML or JSON.

As an example, the HTTP request 101 shown on Figure 1 is composed of:
- A request line comprising three arguments:
   ∘ argument name: Method, argument value: post
   ∘ argument name: URL, argument value: /apiv1
   ∘ argument name: Protocol, argument value: HTTP/2
- Additional headers comprising four arguments:
   ∘ argument name: Host, argument value: abc.test.com
   ∘ argument name: content-type, argument value: application/json
   ∘ argument name: user-agent, argument value: curl
   ∘ argument name: content-length, argument value: 73
- A body comprising three arguments:
   ∘ argument name: uid, argument value: 1234
   ∘ argument name: template, argument value: webui
   ∘ argument name: note, argument value: free text

The HTTP messages received at the WAF during the first step S1 are the ones that will be used in the next steps to generate an API description of the web application, and which could be displayed to the WAF administrator for fine tuning it. These HTTP messages being genuine messages from or to actual users, they may contain personal information of the users. Therefore, it may be desirable not to display any actual value of the arguments of these messages to the administrator.

In order to be able to generate an API description of the web application without relying on arguments values, the WAF processor, in a second step S2, determines from the received HTTP messages a set of metadata of the received HTTP messages, said metadata set comprising, for arguments of the received messages, preferably all arguments of all received messages, each argument's name and, associated therewith, metadata of the argument without disclosing the value of the argument.

Such metadata may for example comprise for each argument, identified by its name: an argument type, an argument format or the argument length. The argument type may indicate the nature of the argument while its format may give additional information regarding how it should be interpreted. As an example, an argument of type integer may have different formats such as "int32" meaning signed and 32 bits long, or "int64" meaning signed and 64 bits long. Such metadata may be standards or may be specific to the web application. These metadata may be derived from arguments located in any part of the HTTP message including the request line, the headers and the body.

At the end of this step, the WAF obtains a metadata set comprising, for at least one, preferably all, arguments from the received messages, the argument name associated to one or more metadata of the argument characterizing it in the legitimate messages exchanged between the web application and clients, without disclosing any value of any argument.

In a third step S3, the WAF processor generates, from said metadata set an Application Programming Interface (API) description of the web application, comprising all arguments names of the metadata set and, for each argument name, allowed values for the metadata associated therewith. Such an API described for each argument, identified by its name, the allowed values of its metadata in a legitimate HTTP message sent to or from the web application.

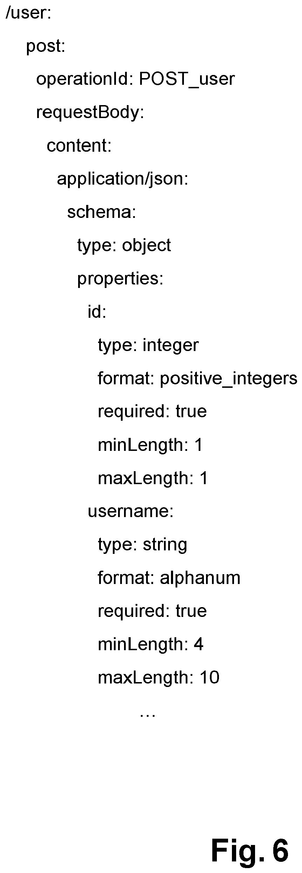

An example of part of such an API description is provided on **Figure 6****.** In this example, allowed values of metadata are first specified for the argument named "id". According to the API description, any argument named "id" in a legitimate message from or to the web application is of type integer, has the format of a positive integer and has a length of exactly 1. Then the API description gives allowed values of metadata for the argument named "username". According to the API description, any argument named "username" in a legitimate message from or to the web application is of type string, has an alphanumerical format and a length comprised between 4 and 10. This example only provides allowed values of metadata for two arguments but of course a full API description may comprise allowed values of metadata for many more arguments.

After completing this learning phase, during a positive filtering rules generation phase, the WAF derives a set of filtering rules from the API description obtained at the end of the learning phase.

In an optional fourth step S4, the processor of the WAF may display the generated API description in the graphical user interface of the WAF to the WAF administrator for customizing by the administrator said arguments' metadata allowed values. Using this display, the WAF administrator may change the allowed values of metadata of the arguments described in the API description.

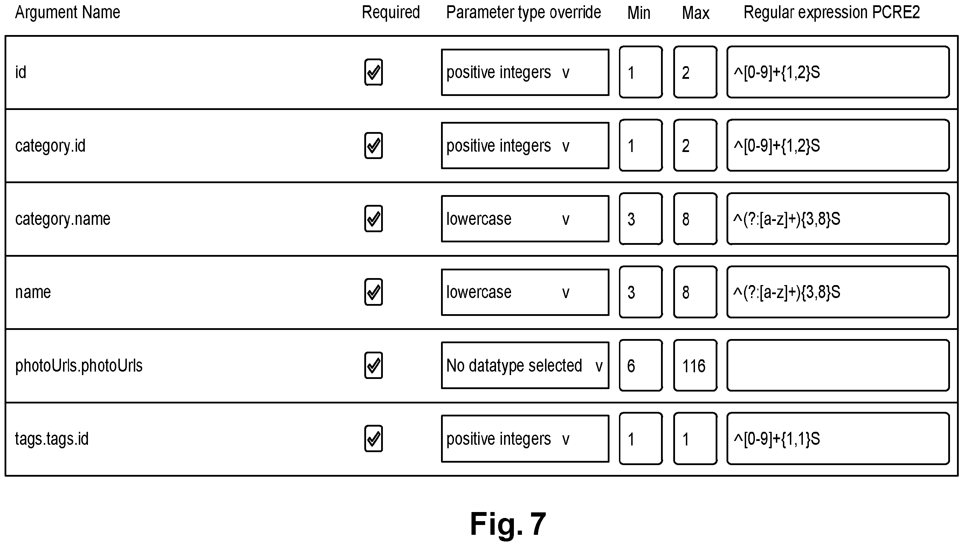

An example of such a display is shown on **Figure 7****.** In this example, the API description shows 6 arguments whose names are "id", "category.id", "category.name", "name", "photoUrls.photoUrls" and "tags.tags.id" and allowed values for metadata such as a parameter type, min value and max value are displayed for each of these 6 arguments and are open to change by the administrator by selecting different values in lists or inputting values in boxes. On this display, the administrator may also indicate whether each parameter is required or not in a HTTP message for it to be later accepted by the positive filtering.

In a fifth step S5, the WAF generates positive filtering rules by automatically transforming the arguments' metadata allowed values of the API description, which may have been customized by the WAF administrator at a fourth step S4, or not, into WAF positive filtering rules. These positive filtering rules are designed to compare the name of the arguments of a filtered message to the name of the arguments subject to a rule, and for the arguments which are subject to a rule, it checks that the value of each argument falls within the metadata allowed values stored in the rule for this argument.

In an embodiment, one separate positive filtering rule is generated for each argument identified by its name in the API description.

To test the accuracy of the generated WAF positive filtering rules, these rules may be checked against messages comprising arguments characteristic of known attacks, for verifying that such messages are not considered as legitimate messages of/for the web application and are dropped by the WAF.

At the end of the positive filtering rules generation phase, the WAF has both the positive filtering rules generated during the positive filtering rules generation phase, and the negative filtering rules stored in one of its memories.

Later, at runtime, a message filtering phase occurs, comprising the following steps, during which the WAF uses both these positive filtering rules and negative filtering rules to filter HTTP messages sent to or from the web application.

In a sixth step S6, the WAF receiving a HTTP message, comprising arguments characterized by an argument name and an argument value. As in the learning phase, this HTTP message may either be a message sent from a client device towards the web application and received by the WAF on its way to the web server, or it may be a HTTP message, such as an answer, generated by the web application and sent towards a client device.

In a seventh step S7, the processor of the WAF processes the received HTTP message and generates from it:
- a first collection comprising the names of the arguments of said HTTP message, and
- a second collection comprising the values of the arguments of said HTTP message.

The first and second collections are generated in a way that enables the WAF to memorize which argument value from the second collection matches which argument name in the first collection. For example, the name and the value of a single argument may have the same index in the first and the second collections.

In an eighth step S8, the processor of the WAF applies the positive filtering rules of the WAF, generated at the fifth step S5, to the first and second collections. In this step, the WAF checks, for each argument of the received HTTP message:
- first if the argument, identified by its name taken from the first collection, is subject to any positive filtering rule;
- then for each argument subject to a rule, if the value of the argument taken from the second collection, complies with the metadata allowed values specified by the rule applying to this argument.

At the end of this eighth step S8, the HTTP message may pass the positive filtering step of the WAF. In such a case, the arguments of the message that have been subject to a positive filtering rule and have verified it may be considered as safe. Indeed, these arguments have values that they typically have in legitimate HTTP messages from/to the web application.

Alternatively, the HTTP message may comprise an argument subject to a positive filtering rule and not fulfilling the rule it is subject to. In some cases, the HTTP message may also comprise at least one argument which is not subject to any WAF positive filtering rule. It may be the case for example when the HTTP message does not correspond to a use case described in the API description of the web application, either because the learning phase did not process enough messages or because the web application itself has evolved since the time the positive filtering rules were generated. A reason may also be that some arguments of HTTP messages may not be considered as sensitive and are not described in the API description in order to avoid generating a too complex positive filtering rule set.

In such cases, a dedicated action may be determined/performed by the WAF. The WAF may for example drop the HTTP message. This is the safest way of managing a message which has unknown arguments which are not part of legitimate messages according to the API description. A deny response may be sent in order to let the message source know that it was rejected.

Nevertheless, such an embodiment may be considered as too conservative. Therefore, in a second embodiment, the message is not dropped and the processing of the message by WAF keeps going, towards a negative filtering.

Then, in a nineth step S9, the WAF generates updated first and second collections by, for each argument fulfilling a WAF positive filtering rule, removing said argument's name from the first collection and said argument's value from the second collection. By doing so, the first and second collection are restricted to arguments which are not yet considered as safe, after the positive filtering step performed by the WAF.

In a tenth step S10, the WAF applies the negative filtering rules stored in one of its memories to the updated first and second collections. By doing so, only the arguments which have not yet been deemed safe are compared to the negative filtering rules. It enables to perform much more quickly the negative filtering than in existing filtering solutions where all the arguments of the HTTP message are checked against the negative filtering rules, which may be numerous.

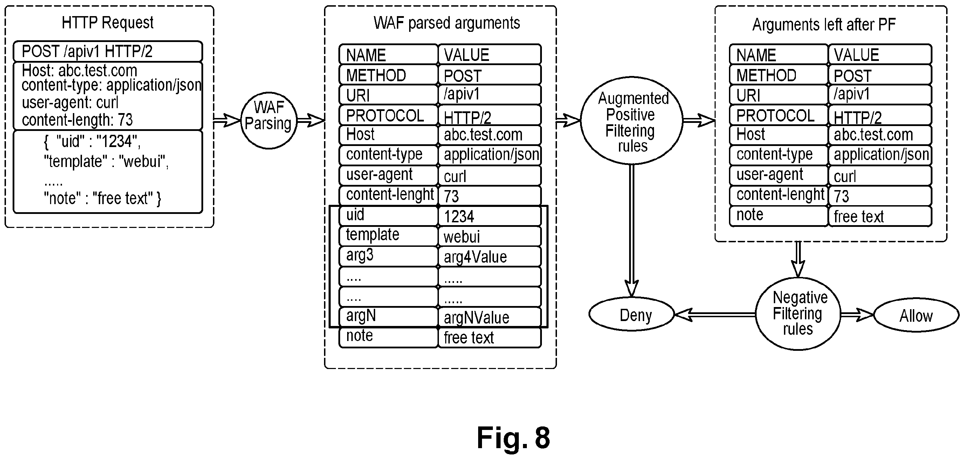

An example is given on **Figure 8****,** where a HTTP message first is subject to the positive filtering of the eighth step S8. In this step, all the arguments of the body of the message, except the last one whose name is "note" are subject to a positive filtering rule and successfully verify it. Therefore, all these arguments, names and values, are removed from the first and second collections and only the remaining arguments (Request line arguments, headers arguments and the last body argument), depicted on the right, are subject to the negative filtering rules.

As a result, the method according to the invention enables to generate complementary sets of positive and negative filtering rules which are efficient, the positive filtering rules being precisely adapted to the API description of the web app. In an embodiment, the presentation of the API description to the WAF administrator in natural language enables him to easily understand and customize the rules without knowing the rules description language of the WAF. Finally, adapting the negative filtering rules to the positive filtering rules enables to use a detailed set of negative rules at a limited cost, lowering the rate of false positive detections compared to more global negative filtering rules.

## Claims

1. A method for filtering HTTP messages comprising arguments **characterized by** an argument name and an argument value, sent to or from a web application to protect against attacks said web application, performed by a Web Application Firewall electronic device (304) comprising a processor (401) and a memory (405) storing negative filtering rules to be applied to at least one collection of arguments names or arguments values and comprising:
• during a learning phase:
- receiving HTTP messages sent to or from the web application (S1),
- determining, by the processor, from the received HTTP messages, a set of metadata of said received HTTP messages (S2), said metadata set comprising, for arguments of the received messages, each argument's name and, associated therewith, metadata of the argument, without disclosing the value of the argument,
- generating, by said processor, from said metadata set, an Application Programming Interface (API) description of the web application, comprising all arguments names of the metadata set and, for each argument name, allowed values for the metadata associated therewith (S3),
• during a positive filtering rules generation phase, performed by said processor:
- generating Web application firewall (WAF) positive filtering rules (S5) by automatically transforming arguments' metadata allowed values of the API description into WAF positive filtering rules,
• at runtime, during a message filtering phase performed by a Web Application Firewall electronic device (WAF) :
- receiving a HTTP message (S6), comprising arguments **characterized by** an argument name and an argument value,
- generating from said received HTTP message, a first collection comprising names of the arguments of said HTTP message and a second collection comprising values of the arguments of said HTTP message (S7),
- applying said generated WAF positive filtering rules to said first and second collections (S8),
- generating updated first and second collections (S9) by, for each argument fulfilling a WAF positive filtering rule, removing said argument's name from the first collection and said argument's value from the second collection,
- applying said negative filtering rules to said updated first and second collections (S10).

2. The method of claim 1, wherein said Web Application Firewall electronic device (304) comprises a user graphical interface (407), comprising, during the positive filtering rules generation phase, displaying the generated API description in said graphical user interface to an administrator for customizing by the administrator said arguments' metadata allowed values (S4), and wherein : generating Web application firewall (WAF) positive filtering rules by automatically transforming arguments' metadata allowed values of the API description into WAF positive filtering rules comprises automatically transforming administrator-customized arguments' metadata allowed values of the API description into WAF positive filtering rules.

3. The method of claim 1 or 2, wherein said HTTP message is a HTTP request to the web application or a HTTP answer generated by the web application.

4. The method of any of the preceding claims, wherein said argument metadata are among argument type, argument format and argument length.

5. The method of any of the preceding claims, wherein said set of metadata of an HTTP message comprises metadata from any part of the HTTP message including request line, headers and body.

6. The method of any of the preceding claims, comprising, when said web application receives a message comprising an argument not subject to any WAF positive filtering rule, determining a predetermined action.

7. The method of any of the preceding claims, comprising when the Web Application Firewall electronic device (WAF) receives a message comprising an argument subject to a WAF positive filtering rule and not verifying it, determining a predetermined action.

8. The method of claim 6 or 7, wherein said predetermined action is determined among : dropping said message, sending a deny response and applying a negative filtering.

9. The method of any of the preceding claims, wherein said generated WAF positive filtering rules are checked against messages comprising arguments characteristic of known attacks.

10. A computer program product directly loadable into the memory of at least one computer, comprising software code instructions for performing the steps of any one of claims 1 to 9 when said product is run on the computer.

11. An electronic device (304) comprising a processor (401), a memory (405) storing negative filtering rules configured for performing the steps of any one of claims 1 to 9.
